# EUROPEAN PATENT APPLICATION

(11) **EP 4 819 453 A1**
(43) Date of publication of application: **07.10.2026**
(21) Application number: 25168138.3
(22) Date of filing: 02.04.2025
(51) Int. Cl.: H02K 5/18, B60S 1/16, H02K 7/116, H02K 9/22, H02K 7/08

(54) **WIPER MOTOR FOR A VEHICLE WIPER SYSTEM**

(71) Applicant: VALEO SYSTEMES D'ESSUYAGE, 78322 Le Mesnil Saint Denis (FR)
(72) Inventor: CRASKE, Louis, 74321 Bietigheim-Bissingen (DE); THIRUVENGADAM, Venkatakrishnan, 600130 Chennai, Tamil Nadu (IN); JOLY, Christophe, 86108 Chatellerault (FR)
(74) Representative: Valeo Visibility

(57) **Abstract**

The present invention pertains to a wiper motor 100 for a vehicle wiper system 200. The wiper motor 100 includes an electric motor 120 such as brushless direct-current motor and a reduction gear 140 accommodated in a housing 160. The housing 160 includes a gear casing 162 encasing the reduction gear 140, and a motor casing 164 encasing the electric motor 120. A plurality of fins 163 are formed on an outer surface 162b of the gear casing 162 for dissipation of heat generated in the wiper motor 100. The plurality of fins 163 are formed on the outer surface 162b such that density of fins 163 near to a worm screw 142 is more than the other portion(s) of the gear casing 162. The fins 163 provides increased surface area for heat dissipation, near the hotspot on the gear casing 162, thereby improving heat dissipation.

## Description

### TECHNICAL FIELD OF THE INVENTION

The present invention relates to a wiper motor for a vehicle wiper system, more particularly to a wiper motor having fins to improve heat dissipation, and a vehicle wiper system comprising such a wiper motor.

### BACKGROUND OF THE INVENTION

Wiper motor is commonly used in vehicle wiper systems. Such systems typically include one or more wiper blades and a linkage mechanism that converts the rotational motion of the wiper motor into the back-and-forth motion of the blades. The wiper motor typically includes an electric motor, often a brushless direct-current motor chosen for its durability, compact size, energy efficiency, and quiet operation. The electric motor is coupled to a reduction gear, commonly a worm gear, to reduce the motor's speed and increase torque. The reduction gear may include a worm screw attached to the rotor shaft of the motor and a worm wheel driving the output shaft of the wiper motor.

The inherent inefficiency of worm gears (approximately 65%) leads to substantial heat generation, particularly in the worm screw and rotor shaft. Further contributing to heat buildup are the motor's electronic and electromagnetic components. This generated heat can negatively impact the wiper motor's performance and lifespan. Existing cooling solutions often prove inadequate for effectively managing this thermal challenge.

The prior art and the conventional wiper motors have various disadvantages as described above and there is a need for a wiper motor with improved cooling that can overcome the disadvantages of the conventional wiper motors.

### SUMMARY OF THE INVENTION

An object of the present invention is to solve the disadvantages described above of known wiper motors. In particular, the object of the present invention is to provide a wiper motor including cooling fins to efficiently manage the heat generated during operation.

Another object of the present invention is to provide a wiper motor having cooling fins formed on outer surface of the gear casing. These fins facilitate heat transfer from the wiper motor to the surrounding air, improving cooling efficiency.

In this context, the present invention is directed in a first aspect towards a wiper motor for a vehicle wiper system, comprising an electric motor, a reduction gear, and a housing. The electric motor may be a brushless direct-current electric motor, comprising a rotor having magnetic elements, a stator having electromagnetic rotor excitation coils, and a rotary shaft rigidly connected to the rotor. The reduction gear further comprises a worm screw and a worm wheel gear; the worm screw is rotationally fixedto the rotary shaft of the rotor and the worm wheel gear is rotationally fixed to an output shaft of the wiper motor. Preferably, the worm screw may be integrally formed with the rotary shaft. The worm screw is in mesh with the worm wheel gear such that the rotational motion of the rotary shaft may be transferred to the output shaft with increased torque and reduced speed. The housing encloses the reduction gear and the electric motorand comprises a gear casing encasing at least the reduction gear, and a motor casing encasing at least the electric motor. The motor casing is preferably secured to the gear casing. The motor casing is preferably cylindrical with one end being open. The open end of the motor casing is preferably aligned with an opening of the gear casing such that the rotary shaft of the electric motor extends inside the gear casing through the opening. The motor casing may be secured to the gear casing by a suitable means such as screws, welds, etc.

According to the invention, the gear casing comprises a plurality of fins formed on an outer surface of the gear casing. The plurality of fins are configured to dissipate heat generated in the wiper motor to the surrounding atmosphere.

When the wiper motor is turned ON, heat generated by the electromagnetic components, electronic components, and/or the reduction gear is advantageously transferred to the gear casing predominantly by convection, and to some extent by conduction. The heat received by the gear casing is subsequently distributed to the fins such that the heat may be dissipated to the surrounding air, by its interaction with the surfaces of the fin and the exposed surface of the outer surface of the gear casing. The plurality of fins provides increased surface area available for heat dissipation, thereby improving the cooling efficiency of the wiper motor.

In a non-limiting embodiment of the present invention, the plurality of the fins may be arranged such that the density of the fins is greater at a portion of the gear casing proximate to the worm screw and/or proximate to the rotary shaft, compared to the remaining portion(s) of the gear casing. Because friction between the worm screw and worm wheel gear generates heat, the region of the gear casing near the worm screw becomes hotter than other regions. Increasing fin density in this high-temperature region improves heat dissipation due to the greater surface area.

In a non-limiting embodiment of the present invention, at least some of the plurality of the fins may be formed near a cylindrical portion of the gear casing. The cylindrical portion may rotatably support the output shaft. Providing fins near the cylindrical portion of the gear casing may further improve overall heat dissipation from the gear casing.

In a non-limiting embodiment of the present invention, the plurality of fins may define passages between adjacent fins. The cooling air may flows through these passages, interacting with both the fin surfaces and the outer surface of the gear casing to dissipate heat.

In a non-limiting embodiment of the present invention, the plurality of fins may extend from the outer surface of the gear casing to a predefined height. The fins may be flat/plate fins having rectangular or trapezoidal cross-section. The fins may extend substantially orthogonal to the outer surface of the gear casing.

In a non-limiting embodiment of the present invention, the height of the plurality of fins may be same or different. Height of the fins may be determined based on local cooling requirements and/or space constraints and/or weight constraints. Further, the fins may have a predefined thickness.

In a non-limiting embodiment of the present invention, the height of at least one of the fins may vary along its length. The height of a portion of the said fin proximate to the worm screw and/or proximate to the rotary shaft may be greater than the height of remaining portion of the said fin. Preferably, in areas of higher temperature, taller fins may be employed to provide the increased surface area necessary for effective heat dissipation.

In a non-limiting embodiment of the present invention, at least two adjacent fins run parallel to each other. Preferably, at least some portions of the adjacent fins may be parallel to each other.

In a non-limiting embodiment of the present invention, at least one fin intersects with at least one of the other fins. Preferably, the intersecting portions of the fins may be provided on the portion of the gear casing proximate to the worm screw and/or proximate to the rotary shaft. So, the surface area available for heat dissipation may be further increased at the high temperature region of the gear casing.

In a non-limiting embodiment of the present invention, the gear casing may include a base portion extending substantially perpendicular to the axis 'X' of the output shaft, and a peripheral portion formed at the periphery of the base portion. The peripheral portion may extend substantially parallel to the axis 'X' of the output shaft. The base portion along with the peripheral portion may define a space for accommodating the reduction gear and other components such as electronic unit etc. The gear casing may have an open side opposite to the base portion for receiving the reduction gear and other relevant components during assembly of the wiper motor. The open side of the gear casing may be covered by a cover.

In a non-limiting embodiment of the present invention, at least one of the plurality of fins is formed partly on the base portion and partly on the peripheral portion of the gear casing. Preferably, plurality of fins may be formed such that the fins continuously run on the base portion and the peripheral portion such that heat may be efficiently dissipated from both the base portion and the peripheral portion.

In a non-limiting embodiment of the present invention, the motor casing may further include plurality of fins formed on an outer surface of the motor casing. The fins may be plate/flat fins having rectangular or trapezoidal cross-section. Preferably, the plurality of fins may be uniformly formed on the outer surface of the motor casing such that the heat received by the motor casing may be efficiently dissipated, thereby further improving cooling efficiency of the wiper motor.

In a non-limiting embodiment of the present invention, the motor casing may include an end portion and a sidewall extending from the periphery of the end portion. The sidewall may be substantially orthogonal to the end portion. The end portion may have a circular shape such that the motor casing has a cylindrical shape. The motor housing may have an open end opposite to the end portion such that the electric motor may be accommodated inside the motor housing. The motor casing may be secured to the gear casing by aligning the open end of the motor casing with the corresponding opening of the gear casing such that the rotary shaft of the electric motor may extend inside the gear casing through the opening.

In a non-limiting embodiment of the present invention, at least one of the plurality of fins may be formed partly on the end portion and partly on the sidewall of the motor casing. Preferably, the plurality of fins may be provided on the outer surface of the motor casing such that the fins runs on both the end portion and the sidewall. Thus, the surface area for heat dissipation may be increased on both the end portion and the sidewall for efficient dissipation of the heat.

The present invention also relates to a vehicle wiper system comprising one or more wiper blades, a linkage mechanism for driving the wiper blade(s) in a reciprocating manner, and the wiper motor as disclosed above, the output shaft being configured to drive the linkage mechanism.

### BRIEF DESCRIPTION OF DRAWINGS

To complete the description and to provide a better understanding of the invention, a set of drawings is provided. Said drawings form an integral part of the description and illustrate an embodiment of the invention, which should not be construed as restricting the scope of the invention, but only as an example of how the invention can be carried out. Items shown in the drawings are not to scale and are simplified to increase clarity of disclosure. In the drawings:
Figure 1A illustrates a schematic perspective view of a wiper motor, according to an embodiment of the present invention;
Figure 1B illustrates a schematic perspective view from bottom side of the wiper motor of Figure 1A, according to an embodiment of the present invention;
Figure 2 illustrates a schematic cross-sectional view on a plane passing through the axis of a rotary shaft of a rotor of an electric motor of the wiper motor of Figure 1, according to an embodiment of the present invention;
Figure 3 illustrates a schematic exploded view of a housing of the wiper motor, according to an embodiment of the present invention;
Figure 4A illustrates a schematic perspective view of a gear casing of the wiper motor, according to an embodiment of the present invention;
Figure 4B illustrates a schematic top view of the gear casing of Figure 4A, according to an embodiment of the present invention;
Figure 5 illustrates a schematic perspective view of a motor casing of the wiper motor, according to an embodiment of the present invention; and
Figure 6 illustrates a schematic perspective view of a vehicle wiper system, according to an embodiment of the present invention.

### DETAILED DESCRIPTION OF THE INVENTION

The characteristics, variants and different modes of realization of the invention may be associated with each other in various combinations, in so far as they are not incompatible or exclusive with each other. In particular, variants of the invention comprising only a selection of features subsequently described in from the other features described may be imagined, if this selection of features is enough to confer a technical advantage and/or to differentiate the invention from prior art.

The following embodiments are examples. Although the description refers to one or more embodiments, this does not necessarily mean that each reference is to the same embodiment, or that the features apply only to one embodiment. Simple features of different embodiments may also be combined and/or interchanged to provide further embodiments.

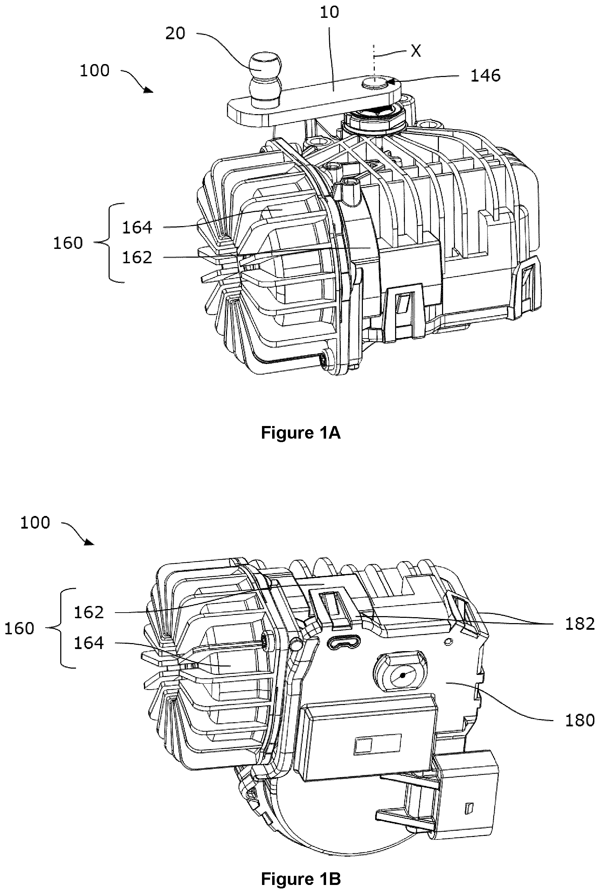

Figures 1A and 1B show a wiper motor 100 according to an embodiment of the present invention. The wiper motor 100 may be used in a vehicle wiper system to drive one or more wiper arms such that wiper blades moves in a to- and-fro motion to wipe the windshield of the vehicle. The wiper motor 100 may include electronic components, electromagnetic components, magnets, and mechanical components encased in a housing 160. The wiper motor 100, more specifically an output shaft 146 of the wiper motor 100 may be connected to wiper arm(s) having wiper blade(s) through linkages, of which a lever 10 with stud 20 can be seen in Figure 1A. The housing 160 may include a motor casing 164 secured to a gear casing 162 in a known manner. The wiper motor 100 may further include a cover 180 secured to the gear casing 162 to close an open side of the gear casing 162 to form an enclosure for accommodating components of the wiper motor 100. A cover 180 may be secured to the gear casing 162 by a suitable securing means 182 such as clamp and may support electronic components such as control unit including printed circuit board etc. arranged inside the housing 160 in a known manner.

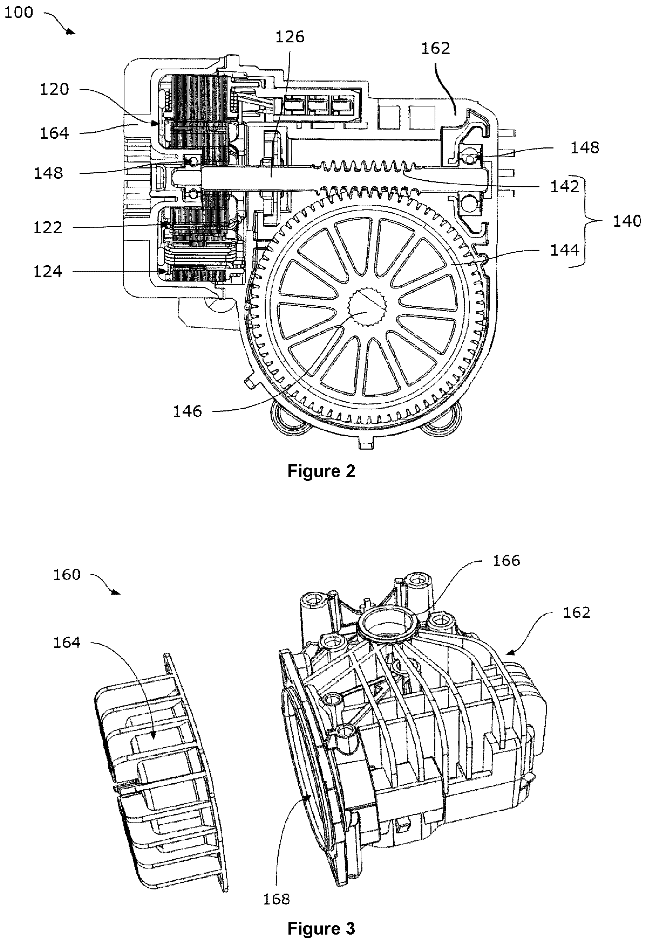

Figure 2 shows a cross sectional view of the wiper motor 100. The wiper motor 100 may include an electric motor 120 received in the housing 160, more specifically in the motor casing 164. The electric motor 120 may be a brushless direct-current electric motor. The electric motor 120 may include a rotor 122 having magnetic elements such as permanent magnets, distributed about the axis of the rotor 122, typically of alternate polarities. The electric motor 120 may further include a stator 124 having electromagnetic rotor excitation coils, and a rotary shaft 126 rigidly connected to the rotor 122. The rotary shaft 126 may extend from the motor casing 164 in to the gear casing 162. The wiper motor 100 may further include a reduction gear 140 received in the gear casing 162. The reduction gear 140 may include a worm screw 142 and a worm wheel gear 144. The worm screw 142 may be secured to the rotary shaft 126 of the electric motor 120. It is to be understood that the worm screw 142 may be integrally formed with the rotary shaft 126. The rotary shaft 126 may be rotatably supported by bearings 148 on both the longitudinal ends i.e. on the side of the electric motor 120 and on the side of the reduction gear 140. The worm wheel gear 144 may be secured to the output shaft 146. The output shaft 146 may be substantially orthogonal to the rotary shaft 126 of the electric motor 120. The worm wheel gear 144 may be meshed with the worm screw 142 such that the torque generated by the electric motor 120 may be significantly increased while reducing the speed in order to provide sufficient torque to the output shaft 146 for operating the wiper blades of the vehicle wiper system.

It is to be noted that the wiper motor 100 may include other known components such as bearings, bushes, guiding means, securing means etc. which may be required for structural integrity and desired functioning of the wiper motor 100.

The wiper motor 100 may additionally include a device for determining the angular position of the rotor 122 relative to the stator 124. The control unit (not shown) may be adapted to generate control signals to power the electromagnetic excitation coils of the stator 124 according to the angular position of the rotor 122 determined by the device.

Figure 3 shows exploded view of the housing 160 of the wiper motor 100. The housing 160 may be in two parts, first part being the gear casing 162 and the second part being the motor casing 164. The motor casing 164 may have a cylindrical shape with one end being open. The gear casing 162 may have an opening 168 complementing the open end of the motor casing 164. The motor casing 164 may be secured to the gear casing 162 such that the opening 168 of the gear casing 162 may be aligned with the open end of the motor casing 164. The motor casing 164 may accommodate and support the components of the electric motor 120 such as rotor 122, stator 124, magnetic elements, electromagnetic windings, and at least some portion of the rotary shaft 126. The rotary shaft 126 may extend from the rotor 122 in to the gear casing 162 through the opening 168. It is to be noted that some portion of the electric motor 120 may also be received in the gear casing 162 through the opening 168. The gear casing 162 may accommodate and support the reduction gear 140 such that the output shaft 146 extends out from a cylindrical portion 166 formed on the gear casing 162. The cylindrical portion 166 may rotatably support the output shaft 146. The axis 'X' of the output shaft 146 may coincide with the axis of the cylindrical portion 166. The cylindrical portion 166 may be adapted to receive bushing, seal, locking means, etc. that are required to rotatably support the output shaft 146. It is to be understood that the motor casing 164 may be secured to the gear casing 162 by any suitable known means such as fasteners, screws, etc.

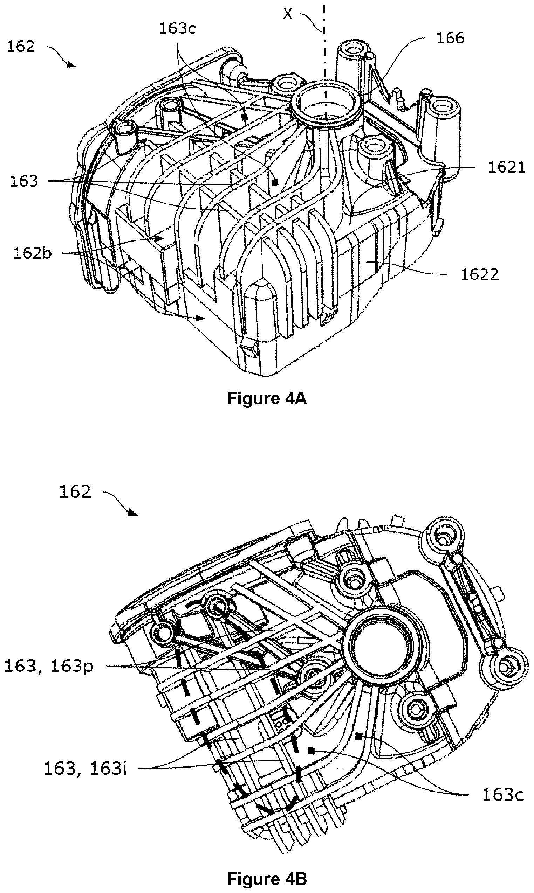

Figure 4A illustrates the gear casing 162 according to the present invention. The gear casing 162 may include a base portion 1621 extending in a plane substantially orthogonal to the axis 'X' of the output shaft 146 or the cylindrical portion 166. The gear casing 162 may further include a peripheral portion 1622 formed at periphery of the base portion 1621 such that the peripheral portion 1622 extends from the base portion 1621 substantially along the axis 'X'. The gear casing 162 may have an outer surface 162b facing outwards. The outer surface 162b of the gear casing 162 may lie on both the base portion 1621 and the peripheral portion 1622 of the gear casing 162.

Plurality of fins 163 may be formed on the outer surface 162b of the gear casing 162 as shown in Figures 4A and 4B. The fins 163 may extend from the outer surface 162b to a predetermined height such that the surface area available for heat dissipation is substantially increased. The fins 163 may be flat/plate fins having rectangular or trapezoidal cross-section. The external cooling air may interact with the surfaces of the fins 163 and the exposed surface of the outer surface 162b to carry away heat from the gear casing 162 thereby effectively cooling the wiper motor 100. The plurality of fins 163 may have same or different heights which may be determined based on space constraints and/or local cooling requirements. Height of the fin 163 may very along its running length.

As shown in Figure 4B, some of the fins 163p may run parallel to each other. Further, the fins 163 may be arranged such that at least one fin 163i may intersect one or more of the other fins 163. Moreover, the fins 163 may be formed such that passages 163c or channels may be defined between adjacent fins 163. Some of the fins 163 may be provided such that some portion of the fin 163 may be formed on the base portion 1621 and some portion of the fin 163 may be formed on the peripheral portion 1622, as visible in Figure 4A. Some of the fins 163 may originate from the cylindrical portion 166 of the gear casing 162 and run over the base portion 1621 and/or the peripheral portion 1622 of the gear casing 162.

The number and/or dimensions and/or positions of the fins 163 on the outer surface 162b of the gear casing may be determined based on local cooling requirements and/or space constraints and/or weight criteria of the wiper motor 100.

During operation of the wiper motor 100, heat may be generated from the electronic components and/or the electromagnetic components and/or the reduction gear 140. In reduction gear 140, heat may be generated due to friction between the worm screw 142 and the worm wheel gear 144. The heat generated within the housing 160 may be transferred to the gear casing 162 mainly by convection. However, the heat may also be transferred to the gear casing 162 by conduction through the physical contacts between the components. The heat received by the gear casing 162 may be distributed to the plurality of fins 163. The external cooling air may flow in the passages 163c and interact with the surfaces of the fins 163 and the exposed surface of the outer surface 162b of the gear casing 162, to carry away heat from the gear casing 162.

In order to improve cooling efficiency, the density of fins 163 may be increased at hot spots i.e. at the portion(s) of the gear casing 162 having higher temperature compared to the other portions of the gear casing 162. For example, the portion encircled in Figure 4B may be proximate to the worm screw 142 and/or proximate to the rotary shaft 126. Therefore, the heat received at that portion may be comparatively more than the other portions of the gear casing 162. The fins 163 may be arranged such that the density of fins 163 at the indicated portion may be more than the other portions of the gear casing. Preferably, the fin density may be increased by providing plurality of parallel and intersecting fins. Further, the height of the fins 163 may be varied such that height of the portion of the fin 163 at the hotspot portion (encircled portion) is greater than the heights of remaining portion of the fin 163. So, the surface area available at the said encircled portion of the gear casing 162, for heat dissipation, may be increased compared to the other portions. Thus, homogenous cooling of the gear casing 162 may be achieved.

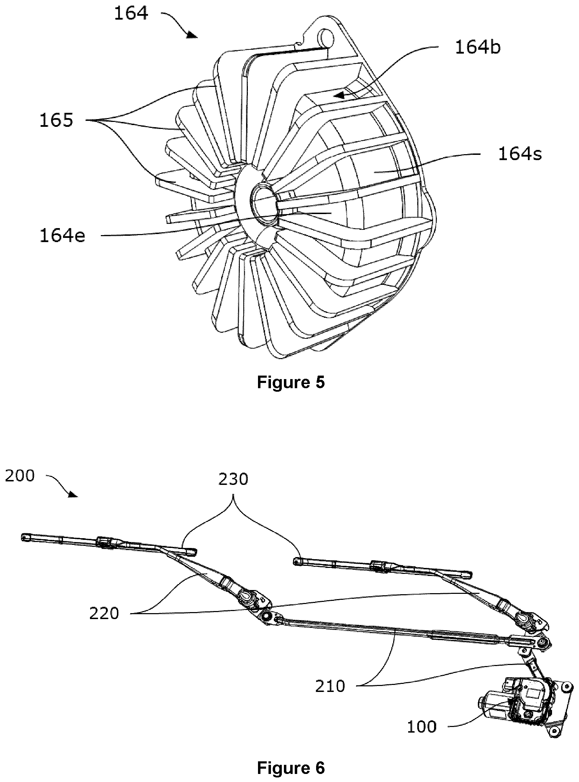

Figure 5 shows the motor casing 164 according to the present invention. The motor casing 164 may be cylindrical to accommodate the electric motor 120. The motor casing 164 may include an end portion 164e and a sidewall 164s extending from the periphery of the end portion164e to define internal space for receiving the electric motor 120. Plurality of fins 165 may be formed on the motor casing 164 such that the fins 165 may extend to a predefined height from an outer surface 164b of the motor casing 164. It is to be understood that the outer surface 164b of the motor casing 164 may relate to both the end portion 164e and the sidewall 164s of the motor casing 164. The plurality of fins 165 may be uniformly distributed/spaced along the circumference of the sidewall 164s of the motor casing 164. Further, the fins 165 may lie partly on the sidewall 164s and partly on the end portion 164e of the motor casing 164. The heat generated mainly from the electromagnetic components of the electric motor 120 may be transferred to the motor casing 164 by convection and/or conduction. The heat received by the motor casing 164 may be distributed to the fins 165 and dissipated to the outside atmosphere when external cooling air interacts with the surfaces of the fins 165 and exposed outer surface 164b of the motor casing 164. It is to be understood that the heat may be transferred between the motor casing 164 and the gear casing 162 by conduction.

Figure 6 illustrates a vehicle wiper system 200 including the wiper motor 100 as disclosed above. The wiper motor 100, more specifically the output shaft 146 of the wiper motor 100 may be connected to one end of wiper arms 220 through linkages 210. A wiper blade 230 may be attached to another end of the wiper arms 220 such that the wiper motor 100 drives the wiper arms 220 to oscillate between predefined angular positions to wipe out the water and/or dirt present on the windshield (not shown) of the vehicle.

The person skilled in the art realizes that the present invention by no means is limited to the preferred embodiments described above. On the contrary, many modifications and variations are possible within the scope of the appended claims. In addition, the skilled person readily realizes that the different embodiments described herein may be combined freely to obtain new combinations.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantages

### LIST OF REFERENCE SIGNS

| | |
|---|---|
| 10 | Lever |
| 20 | Stud |
| 100 | Wiper motor |
| 120 | Electric motor |
| 122 | Rotor |
| 124 | Stator |
| 126 | Rotary shaft |
| 140 | Reduction gear |
| 142 | Worm screw |
| 144 | Worm wheel gear |
| 146 | Output shaft |
| 148 | Bearing |
| 160 | Housing |
| 162 | Gear casing |
| 162b | Outer surface of the gear casing |
| 1621 | Base portion of the gear casing |
| 1622 | Peripheral portion of the gear casing |
| 163, 163p, 163i, 165 | Fin |
| 163c | Passage |
| 164 | Motor casing |
| 164b | Outer surface of the motor casing |
| 164e | End portion of the motor casing |
| 164s | Sidewall of the motor casing |
| 166 | Cylindrical portion of the gear casing |
| 168 | Opening |
| 180 | cover |
| 182 | Securing means |
| 200 | Vehicle wiper system |
| 210 | Linkage mechanism |
| 220 | Wiper arm |
| 230 | Wiper blade |

## Claims

1. A wiper motor (100) for a vehicle wiper system (200), the wiper motor (100) comprising:
an electric motor (120) including a rotor (122) having magnetic elements, a stator (124) having electromagnetic rotor excitation coils, and a rotary shaft (126) rigidly connected to the rotor (122);
a reduction gear (140) comprising a worm screw (142) and a worm wheel gear (144), the worm screw (142) being rotationally fixed to the rotary shaft (126) of the rotor (122) and the worm wheel gear (144) being rotationally fixed to an output shaft (146) of the wiper motor (100); and
a housing (160) enclosing the reduction gear (140) and the electric motor (120),
the housing (160) comprising a gear casing (162) enclosing at least the reduction gear (140), and a motor casing (164) enclosing at least the electric motor (120), the motor casing (164) being secured to the gear casing (162),
**characterized in that** the gear casing (162) comprises a plurality of fins (163) formed on an outer surface (162b) of the gear casing (162), the plurality of fins (163) being configured to dissipate heat generated in the wiper motor (100) to the surrounding atmosphere.

2. The wiper motor (100) according to claim 1, wherein the plurality of fins (163) are arranged such that the density of the fins (163) is greater at a portion of the gear casing (162) proximate to the worm screw (142) and/or proximate to the rotary shaft (126), with respect to the remaining portion(s) of the gear casing (162).

3. The wiper motor (100) according to any of preceding claims, wherein at least some of the plurality of the fins (163) are formed near a cylindrical portion (166) of the gear casing (162), the cylindrical portion (166) rotatably supporting the output shaft (146).

4. The wiper motor (100) according to any of preceding claims, wherein the plurality of fins (163) define passages (163c) between adjacent fins (163).

5. The wiper motor (100) according to any of preceding claims, wherein the plurality of fins (163) extend from the outer surface (162b) of the gear casing (162) to a predefined height.

6. The wiper motor (100) according to claim 5, wherein the height of the plurality of fins (163) is same or different.

7. The wiper motor (100) according to claim 5, wherein the height of at least one of the fins (163) varies along its length, the height of a portion of the said fin (163) proximate to the worm screw (142) and/or proximate to the rotary shaft (126), being greater than the height of remaining portion of the said fin (163).

8. The wiper motor (100) according to any of preceding claims, wherein at least two adjacent fins (163p) run parallel to each other.

9. The wiper motor (100) according to any of preceding claims, wherein at least one fin (163i) intersects with at least one of the other fins (163).

10. The wiper motor (100) according to any of preceding claims, wherein the gear casing (162) includes a base portion (1621) extending substantially perpendicular to the axis 'X' of the output shaft (146), and a peripheral portion (1622) formed at the periphery of the base portion (1621), the peripheral portion (1622) extending substantially parallel to the axis 'X' of the output shaft (146).

11. The wiper motor (100) according to claim 10, wherein at least one of the plurality of fins 163 is formed partly on the base portion (1621) and partly on the peripheral portion (1622) of the gear casing (162).

12. The wiper motor (100) according to any of preceding claims, wherein the motor casing (164) further includes plurality of fins (165) formed on an outer surface (164b) of the motor casing (164).

13. The wiper motor (100) according to claim 12, wherein the motor casing (164) includes an end portion (164e) and a sidewall (164s) extending from the periphery of the end portion (164e), the sidewall (164s) being substantially orthogonal to the end portion (164e).

14. The wiper motor (100) according to claim 13, wherein at least one of the plurality of fins (165) is formed partly on the end portion (164e) and partly on the sidewall (164s) of the motor casing (164).

15. A vehicle wiper system (200) comprising one or more wiper blades (230), a linkage mechanism (210) for driving the wiper blade(s) (230) in a reciprocating manner, and the wiper motor (100) according to any of preceding claims, the output shaft (146) being configured to drive the linkage mechanism (210).
